(19) Europäisches Patentamt
European Patent Office
Office européen des brevets

(11) Veröffentlichungsnummer: **0 217 240**
**B1**

(12) # EUROPÄISCHE PATENTSCHRIFT

(45) Veröffentlichungstag der Patentschrift: **06.12.89**

(51) Int. Cl.⁴: **C 07 C 69/76**, C 09 K 19/08

(21) Anmeldenummer: **86112905.4**

(22) Anmeldetag: **18.09.86**

(54) **Chirale Ester mesogener Carbonsäuren, ein Verfahren zu deren Herstellung und ihre Verwendung als Dotierstoff in Flüssigkristall-Phasen.**

(30) Priorität: **30.09.85 DE 3534778**

(43) Veröffentlichungstag der Anmeldung: **08.04.87 Patentblatt 87/15**

(45) Bekanntmachung des Hinweises auf die Patenterteilung: **06.12.89 Patentblatt 89/49**

(84) Benannte Vertragsstaaten: **CH DE FR GB LI**

(56) Entgegenhaltungen:
**DE-A-3 333 677**
**JP-A-60 038 346**

(73) Patentinhaber: **HOECHST AKTIENGESELLSCHAFT, Postfach 80 03 20, D-6230 Frankfurt am Main 80 (DE)**

(72) Erfinder: **Bahr, Christian, Hohenzollerndamm 189, D-1000 Berlin 31 (DE)**
Erfinder: **Heppke, Gerd, Prof. Dr., Johann- Georg Strasse 3, D-1000 Berlin 31 (DE)**
Erfinder: **Lötzsch, Detlef, Lessingstrasse 10, D-1000 Berlin 21 (DE)**
Erfinder: **Oestreicher, Feodor, Dr., Zeppelinstrasse 40, D-1000 Berlin 20 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 217 240 B1

LIBER, STOCKHOLM 1989

**Beschreibung**

Die Kennlinien der in Flüssigkristall-Displays verwendeten elektro-optischen Effekte verändern sich im allgemeinen mit der Temperatur. Insbesondere bei einer Ansteuerung im Multiplexbetrieb ergeben sich daraus Schwierigkeiten, die zu einer unerwünschten Einschränkung des Arbeitstemperaturbereiches führen können. Bei verschiedenen elektrooptischen Effekten kann durch Zusatz chiraler Verbindungen zum nematischen Flüssigkristall über die Temperaturfunktion der Ganghöhe der dadurch induzierten cholesterischen Helixstruktur die Temperaturabhängigkeit der elektrooptischen Kennlinien vorteilhaft beeinflußt werden, so beim cholesterisch-nematischen Phasenumwandlungseffekt, der TN ("twisted nematic")-Zelle und dem kürzlich vorgestellten SBE ("supertwisted birefringence effect"). Die üblichen bekannten Dotierstoffe induzieren im allgemeinen eine mit zunehmender Temperatur ansteigende Ganghöhe; es sind in jüngster Zeit auch bereits Dotierstoffe beschrieben worden, die diesen oftmals unerwünschten Effekt nicht zeigen.

Aus der DE-C-2 827 471 (= US-A-4 264 148) ist der Zusatz von zwei unterschiedlichen chiralen Dotierstoffen zu nematischen Trägersubstanzen bekannt; dabei erzeugt der eine chirale Dotierstoff in der nematischen Trägersubstanz eine rechtshändige Verdrillung, der andere eine linkshändige Verdrillung. Mit einer solchen Dotierung wird eine Abnahme der Ganghöhe erreicht, aber es sind zur Erreichung dieses Effekts relativ hohe Gesamtkonzentrationen erforderlich, die zu einer negativen Beeinflussung der anderen Materialparameter führen können.

In der DE-A-3 333 677 werden u. a. Umsetzungsprodukte (Ester) von chiralem Butandiol-(2,3) mit mesogenen Carbonsäuren beschrieben, die bereits in Einzeldotierung in Flüssigkristall-Phasen die Optimierung der Temperaturkompensation vereinfachen können. Diese bekannten Ester weisen aber oftmals ein für bestimmte Anwendungen noch zu niedriges Verdrillungsvermögen auf. Das dem Reziprokwert des Verdrillungsvermögens entsprechende "pc-Produkt" beträgt nach den Angaben in dieser DE-A 9,2 bis 116 µm · Gew.-%.

Die optisch-aktiven Ester gemäß der JP-A-58 146 663 werden durch die allgemeine Formel

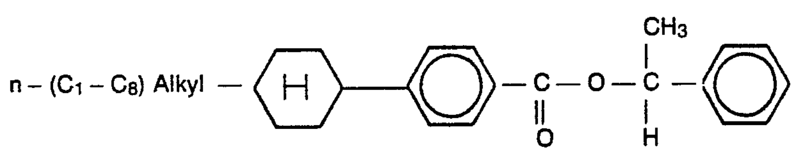

beschrieben, sie sollen als Dotierstoffe für nematische Flüssigkristall-Phasen geeignet sein und darin eine rechts- oder linkshändige Verdrillung erzeugen können. Sie genügen aber noch nicht in jedem Fall den Praxisanforderungen.

Aufgabe der vorliegenden Erfindung ist es deshalb, neue Verbindungen aufzufinden, die bei ihrem Einsatz als chirale Dotierstoffe in Flüssigkristall-Phasen bei verhältnismäßig geringen Zusatzmengen bereits eine Optimierung der Temperaturkompensation und gleichzeitig eine hohe Verdrillung der induzierten Helixstrukturen bewirken.

Die Erfindung geht aus von einem bekannten Ester aus einem chiralen Alkohol und einer mesogenen Carbonsäure. Die erfindungsgemäßen Verbindungen sind gekennzeichnet durch die allgemeine Formel (I)

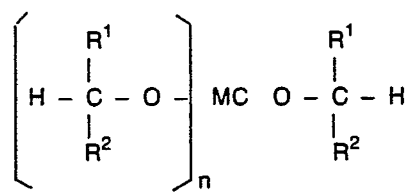

(I)

in der die Symbole folgende Bedeutung haben:

n = 0 oder 1,
$R^1$ = durch Halogen, insbesondere Fluor, substituiertes, geradkettiges oder verzweigtes ($C_1$-$C_4$)Alkyl
$R^2$ = unsubstituiertes oder substituiertes ($C_6$-$C_{18}$)Aryl, Cyclo ($C_5$-$C_{12}$)alkyl oder ein- oder zweikerniges Fünf- und/oder Sechsring-Heteroaryl, und
MC = $R^3$-($A^1$-)$_{n1}$(B-)$_{n2}$($A^2$-)$_{n3}$CO bei n = O oder OC-($A^1$-)$_{n1}$ (B-)$_{n2}$($A^2$-)$_{n3}$CO bei n = 1
$R^3$ = geradkettiges ($C_4$-$C_{10}$)Alkyl, wobei eine $CH_2$ - Gruppe durch ein 0-Atom ersetzt sein kann,
$A^1$, $A^2$ = unabhängig voneinander unsubstituiertes 1,4-Phenylen oder 1,4-Cyclohexylen
B = CO-0 oder 0-CO
n1 = 1
n2 = 0 oder 1
n3 = 1 oder 2

Eine weitere Lösung der gestellten Aufgabe ist eine verdrillbare Flüssigkristall-Phase mit einem Gehalt an mindestens einer chiralen Verbindung, die dadurch gekennzeichnet ist, daß sie als chirale Verbindung mindestens eine Verbindung der allgemeinen Formel (I) enthält. Unter dem Begriff "verdrillbare Flüssigkristall-Phase" sind nematische, cholesterische, geneigt ("tilted")-smektische, insbesondere smektisch C ($S_c$ oder SmC), Phasen zu verstehen.

Die erfindungsgemäßen verdrillbaren Flüssigkristallphasen bestehen aus 2 bis 20, vorzugsweise 2 bis 15 Komponenten, darunter mindestens einem der erfindungsgemäß beanspruchten chiralen Dotierstoffe. Die anderen Bestandteile werden vorzugsweise ausgewählt aus den bekannten Verbindungen mit nematischen, cholesterischen und/oder geneigtsmektischen Phasen, dazu gehören beispielsweise Schiffsche Basen, Biphenyle, Terphenyle, Phenylcyclohexane, Cyclohexylbiphenyle, Pyrimidine, Zimtsäureester, Cholesterinester, verschieden überbrückte, terminal-polare mehrkernige Ester von p-Alkylbenzoesäuren. Im allgemeinen liegen die im Handel erhältlichen Flüssigkristall-Phasen bereits vor der Zugabe des chiralen Dotierstoffes als Gemische verschiedenster Komponenten vor, von denen mindestens eine mesogen ist, d. h. als Verbindung, in derivatisierter Form oder im Gemisch mit bestimmten Cokomponenten eine Flüssigkristall-Phase zeigt [= mindestens eine enantiotrope (Klärtemperatur > Schmelztemperaur) oder monotrope (Klärtemperatur < Schmelztemperatur) Mesophasenbildung erwarten läßt].

Mit Hilfe der neu-entwickelten Verbindungen als Dotierstoff gelingt es bei geringer Menge an Dotierstoff in Flüssigkristall-Phasen eine hohe Verdrillung zu erzielen, wobei die Verbindungen außerdem eine bei Temperaturänderung im wesentlichen unabhängige Ganghöhe aufweisen, d. h. die im allgemeinen im Bereich von 1 % bis 1 ‰ pro K liegende Zu- oder Abnahme der Ganghöhe liegt insbesondere bei weniger als 3 ‰. Das Produkt p · c (p = Ganghöhe der induzierten Belixstruktur in µm, c = Konzentration des chiralen Dotierstoffes in Gew.-%) ist kleiner als 9, insbesondere liegt es zwischen 0,5 und 6. Einige der erfindungsgemäßen Verbindungen sind gute Zusätze für die Umwandlung getilteter smektischer Phasen, insbesondere von SmC-Phasen, in ferroelektrische Flüssigkristall-Phasen. wobei diese Eignung umso besser ist, desto höher die Werte der spontanen Polarisation ($P_s$) in nC · $cm^{-2}$ sind. Ein weiterer Einsatz kann bei der Thermotopographie oder zur Erzeugung von "blue phases" (= cholesterische Systeme mit relativ kleiner Ganghöhe von z. B. weniger als 800 nm) erfolgen.

Von der oder den erfindungsgemäßen Dotierstoffen enthalten die Flüssigkristall-Phasen im allgemeinen 0,01 bis 70 Gew.-%, insbesondere 0,05 bis 50 Gew.-%.

**Beispiele und Vergleichsbeispiele**

**Synthesevorschrift**

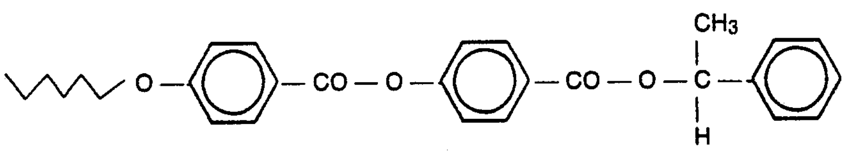

(1)

4-(4-n-Hexyloxy-benzoyloxy)-benzoesäureester des (R)-1-Phenylethanols-(1)

Zu 10 mmol der mesogenen 4-(4-n-Hexyloxy-benzoyloxy)-benzoesäure werden 100 mmol $SOCl_2$ zugesetzt. Es werden 5 Tropfen Pyridin zugegeben und das Reaktionsgemisch wird während 2h unter Rückfluß erhitzt. Das überschüssige $SOCl_2$ wird abgezogen (abdestilliert). Das entstehende Säurechlorid wird in Pyridin gelöst. Das optisch aktive 1-Phenylethanol-(1) wird in äquimolarer Menge langsam der Lösung zugesetzt und das Reaktionsgemisch wird danach während 5h unter Rückfluß erhitzt. Das Gemisch wird filtriert, die Lösung eingedampft und über eine Kieselgelsäure gereinigt. Das umkristallisierte Produkt entspricht nach den analytischen Daten (Elementaranalyse, NMR-Spektrum, IR-Spektrum) der angegebenen Formel (1).

Entsprechend werden die nachstehenden Verbindungen (2) bis (6) synthetisiert, wobei bei dem Dieser (6) in der zweiten Reaktionsstufe die doppelte molare Menge an Alkohol eingesetzt wird.

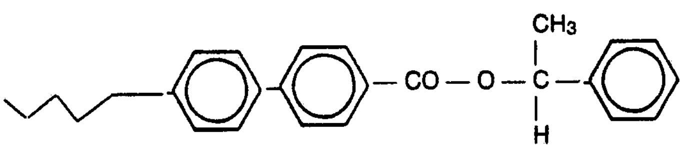

(2)

4'-n-PenTyl-4-diphenylcarbonsäureester des (S)-1-Phenylethanols-(1)

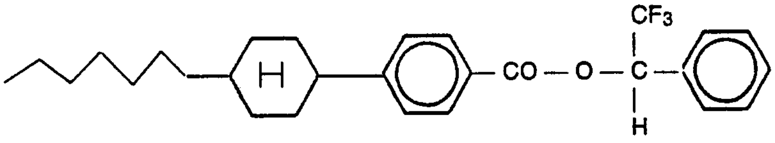

(3)

4-(Trans-4-n-Heptyl-cyclohexyl)-benzoesäureester des (R)-1-Phenyl-2,2,2-trifluorethanols-(1)

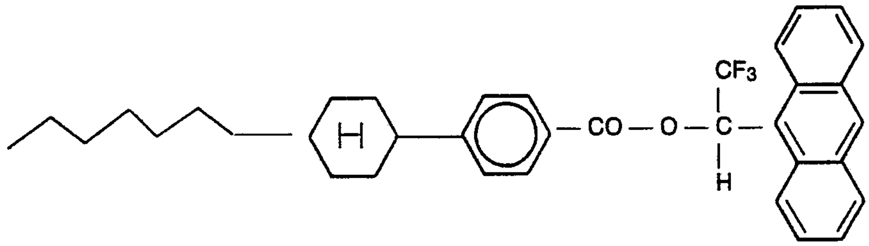

(4)

4-(trans-4-n-Heptyl-cyclohexyl)-benzoesäureester des (S)-1-(9'-Anthryl)-2,2,2-trifluorethanols-(1)

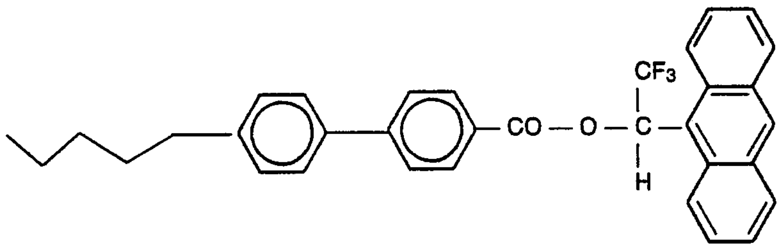

(5)

4'-n-Pentyl-4-diphenylcarbonsäureester des (S)-1-(9'-Anthryl)-2,2,2-trifluorethanols-(1)

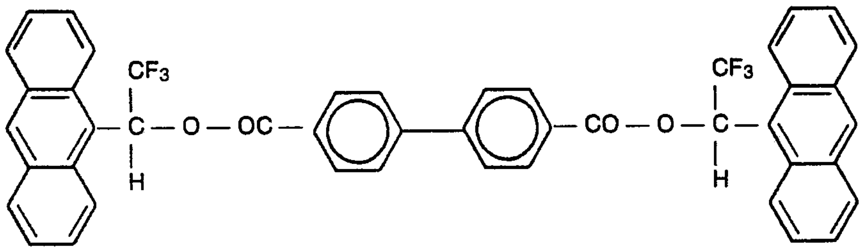

(6)

4,4-Diphenyldicarbonsäurediester des (S)-1-(9'-Anthryl)-2,2,2-trifluorethanols-(1)

**Anwendungsvorschrift**

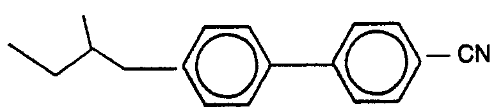

(X)

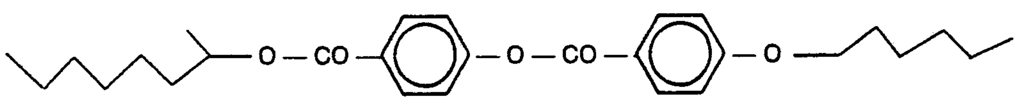

(Y)

In einer handelsüblichen nematischen Weitbereichsmischung - "RO-TN 404" der Boffmann-La Roche Aktiengesellschaft (Basel/Schweiz) - mit einem Klärpunkt von 104°C wird je eine der Verbindungen (1) bis (6) und zum Vergleich je eine der Verbindungen (X) und (Y) zugesetzt; die Vergleichsverbindungen sind die handelsüblichen chiralen Dotierstoffe "CB 15" von BDH (British Drug House), Poole (GB) und "S 811" von E. Merck, Darmstadt (DE). In dieser Flüssigkristall-Phase werden dann die Verdrillung in µm · Gew.-% (= p · c) - angegeben bei einer Temperatur von 25°C - und die Temperaturabhängigkeit der Ganghöhe in ‰ pro K bestimmt.

Die spontane Polarisation ($P_s$) - soweit meßbar - wird in der SmC-Phase der handelsüblichen Verbindung "HEPTOAB" (Hersteller z. B. Frinton - USA) mit den Kenndaten "K 74,4 SmC 95,4 N 124,2 J" bestimmt und mit ebenfalls (X) und (Y) und zusätzlich mit einer bekannten Verbindung (Z) mit ferroelektrischen Eigenschaften verglichen.

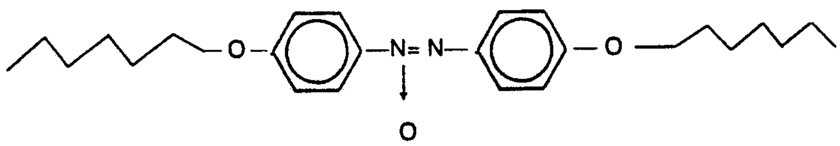

HEPTOAB

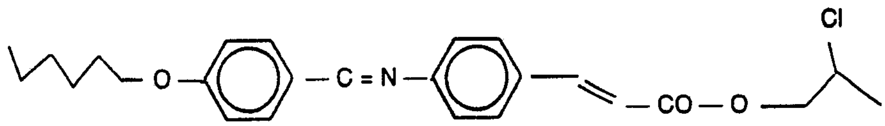

(Z)

In beiden Meßreihen werden vom jeweiligen Dotierstoff 10 mol % zugesetzt.

| Verbindung | p.c (µm · Gew.-% bei 25°C) | Temperaturabhängigkeit (‰ pro K) | $P_s$ (nC pro $cm^2$) | Meßtemperatur (°C) |
|---|---|---|---|---|
| 1 | + 6,2 | 1 | 11,1 | 65 |
| 2 | - 5,1 | 1 | – | – |
| 3 | - 4,6 | 1 | 7,3 | 65 |
| 4 | + 2,1 | 1 | – | – |
| 5 | + 1,9 | 1 | – | – |
| 6 | + 9,0 | 1 | – | – |
| X | + 14 | 4 | – | – |
| Y | - 8,5 | 2 | 4,5 | 75 |
| Z | – | – | 0,5 | 65 |

## Patentansprüche

1. Ester aus einem chiralem Alkohol und einer mesogenen Carbonsäure gekennzeichnet durch die allgemeine Formel (I)

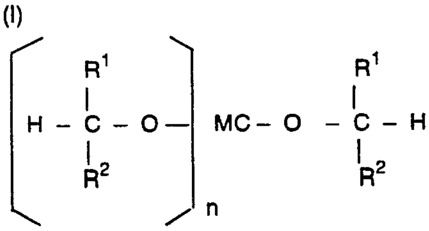

(I)

in der die Symbole folgende Bedeutung haben:

n = 0 oder 1
$R^1$ = durch Halogen, insbesondere Fluor substituiertes, gradkettiges oder verzweigtes ($C_1$-$C_4$)Alkyl,
$R^2$ = unsubstituiertes oder substituiertes ($C_6$-C18)Aryl, Cyclo ($C_5$-$C_{12}$)alkyl oder ein- oder zweikerniges Fünfund/oder Sechsring-Heteroaryl, und
MC = $R^3$-($A^1$-$)_{n1}$(B-$)_{n2}$($A^2$-$)_{n3}$CO bei n = O oder OC-($A^1$-$)_{n1}$ (B-$)_{n2}$($A^2$-$)_{n3}$CO bei n = 1
$R^3$ = geradkettiges ($C_4$-$C_{10}$)Alkyl, wobei eine $CH_2$ -Gruppe durch ein 0-Atom ersetzt sein kann,
$A^1$, $A^2$ = unabhängig voneinander unsubstituiertes 1,4-Phenylen oder 1,4-Cyclohexylen
B = CO-0 oder 0-CO
n1 = 1
n2 = 0 oder 1
n3 = 1 oder 2

2. Verfahren zur Herstellung eines Esters nach Anspruch 1, dadurch gekennzeichnet, daß die mesogene Monocarbonsäure der Formel MC-OH (bei n = 0) oder Dicarbonsäure der Formel HO-MC-OH (bei n = 1) zum entsprechenden Säurechlorid und anschließend mit einem Alkohol der allgemeinen Formel

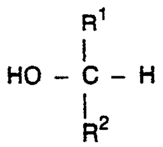

zum Mono- oder Diester umgesetzt wird.

3. Verdrillbare Flüssigkristall-Phase, bestehend aus 2 bis 20 Komponenten, dadurch gekennzeichnet, daß sie mindestens eine chirale Verbindung gemäß der allgemeinen Formel (1) nach Anpruch 1 enthält.

4. Flüssigkristall-Phase nach Anspruch 3, dadurch gekennzeichnet, daß sie 0,01 bis 70 Gew.-% an mindestens einer der chiralen Verbindungen enthält.

5. Flüssigkristall-Anzeigeelement enthaltend eine Flüssigkristall-Phase nach Anspruch 3.

6. Verwendung einer chiralen Verbindung gemäß der allgemeinen Formel (I) nach Anspruch 1 zur Temperaturkompensation und Erzeugung einer hohen Verdrillung in Flüssigkristall-Phasen.

7. Verfahren zur Temperaturkompensation und hohen Verdrillung in Flüssigkristall-Anzeigeelementen, die eine Flüssigkristall-Phase enthalten, durch Zusatz von mindestens einer chiralen Verbindung, dadurch gekennzeichnet, daß man der Flüssigkristall-Phase 0,01 bis 70 Gew.-% mindestens eine Verbindung gemäß der allgemeinen Formel (I) nach Anspruch 1 zusetzt.

## Claims

1. An ester of a chiral alcohol and a mesogenic carboxylic acid, which is of the general formula (I)

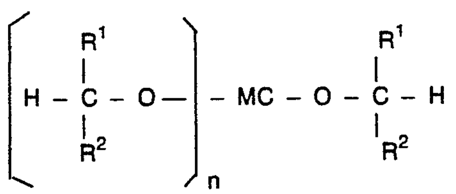

(I)

in which the symbols have the following meanings: n denotes 0 or 1,

$R^1$ denotes a straight-chain or branched ($C_1$-$C_4$)alkyl which is substituted by halogen, in particular fluorine,
$R^2$ denotes unsubstituted or substituted ($C_6$-$C_{18}$) aryl, cyclo ($C_5$-$C_{12}$)alkyl or mononuclear or binuclear heteroaryl possessing a five-membered and/or sixmembered ring, and
MC denotes $R^3$-$(A^1\text{-})_{n1}(B\text{-})_{n2}(A^2\text{-})_{n3}$CO where n = 0 or denotes OC-$(A^1\text{-})_{n1}(B\text{-})_{n2}(A^2\text{-})_{n3}$CO where n = 1,
$R^3$ denotes a straight-chain ($C_4$-$C_{10}$)alkyl in which a $CH_2$ group can be replaced by an 0 atom,
$A^1$, $A^2$ independently of one another denote unsubstituted 1,4-phenylene or 1-4-cyclohexylene,
B denotes CO-0 or 0-CO,
n1 denotes 1
n2 denotes 0 or 1 and
n3 denotes 1 or 2.

2. A process for the preparation of an ester as claimed in claim 1, wherein the mesogenic monocarboxylic acid of the formula MC-OH (where n = 0) or dicarboxylic acid of the formula HO-MC-OH (where n = 1) is converted to the corresponding acyl chloride and then reacted with an alcohol of the general formula

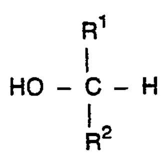

to give a mono- or diester.

3. A twistable liquid crystal phase composed of 2 to 20 components, which contains at least one chiral compound of the general formula (I) as claimed in claim 1.

4. A liquid crystal phase as claimed in claim 3, which contains 0.01 to 70 % by weight of at least one of the chiral compounds.

5. A liquid crystal display element containing a liquid crystal phase as claimed in claim 3.

6. The use of a chiral compound of the general formula (I) as claimed in claim 1 for temperature compensation and for producing a large twist in liquid crystal phases.

7. A method for temperature compensation and for producing a large twist in liquid crystal display elements which contain a liquid crystal phase, by adding at least one chiral compound, wherein 0.01 to 70 % by weight-of at least one compound of the general formula (I) as claimed in claim 1 is added to the liquid crystal phase.

**Revendications**

1. Esters d'un alcool chiral et d'un acide carboxylique mésogène, caractérisés par la formule générale (I) suivante:

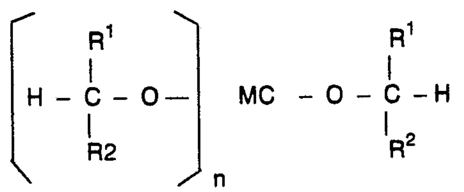

(I)

où les symboles ont les significations suivantes:

n = 0 ou 1,
$R^1$ est un radical alkyle en $C_1$-$C_4$, à chaine droite ou ramifiée, substitué par un ou plusieurs halogènes, en particulier le fluor,
$R^2$ est un radical aryle en $C_6$-$C_{18}$ substitué ou nonsubstitué, cycloalkyle en $C_5$-$C_{12}$, ou un radical hétéroaryle à un ou deux noyaux, à cinq et/ou six chainons, et
MC = $R^3$-($A^1$-)$_{n1}$(B-)$_{n2}$($A^2$-)$_{n3}$CO, où n = 0 ou OC-($A^1$-)$_{n1}$(B-)$_{n2}$($A^2$-)$_{n3}$CO pour n = 1,
R3 est un radical alkyle en $C_4$-$C_{10}$ à chaine droite, où un groupe CH2 Peut être remplacé par un atome d'oxygène,
$A^1$, $A^2$, indépendamment l'un de l'autre, sont chacun un radical phénylène-1,4 ou cyclohexylène-1,4 non-substitué,
B = CO-0 ou 0-CO,
n1 = 1,
n2 = 0 ou 1,
n3 = 1 ou 2.

2. Procédé pour la préparation d'un ester selon la revendication 1, caractérisé en ce que l'acide monocarboxylique mésogène de formule MC-OH (pour n = 0) ou l'acide dicarboxylique de formule HO-MC-OH (pour n = 1) est mis à reagir pour donner le chlorure d'acide correspondant, puis avec un alcool de formule générale

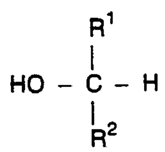

pour donner le mono- ou le diester.

3. Phase mésomorphe torsadable constituée de 2 à 20 composants, caractérisée en ce qu'elle contient au moins un composé chiral selon la formule générale (I) de la revendication 1.

4. Phase mésomorphe selon la revendication 3, caractérisée en ce qu'elle contient de 0,01 à 70 % en poids d'au moins l'un des composés chiraux.

5. Elément d'affichage à cristaux liquides contenant une phase mésomorphe selon la revendication 3.

6. Utilisation d'un composé chiral selon la formule générale (I) de la revendication 1 pour la compensation de température et la production d'un torsadage élevé dans des phases mésomorphes.

7. Procédé de compensation de température et de torsadage élevé dans des éléments d'affichage à cristaux liquides contenant une phase mésomorphe, par addition d'au moins un composé chiral, caractérisé en ce qu'on ajoute à la phase mésomorphe de 0,01 à 70 % en poids d'au moins un composé selon la formule générale (I) de la revendication 1.